# EUROPEAN PATENT SPECIFICATION

(11) **EP 3 453 440 B1**
(45) Date of publication and mention of the grant of the patent: **01.07.2020**
(21) Application number: 18193515.6
(22) Date of filing: 10.09.2018
(51) Int. Cl.: B01D 39/16

(54) **MULTI-LAYER COMPOSITE FILTER MEDIA AND METHOD OF MAKING SAME**
MEHRSCHICHTIGE VERBUNDFILTERMEDIEN UND VERFAHREN ZUR HERSTELLUNG DAVON
MILIEU FILTRANT COMPOSITE MULTICOUCHES ET SON PROCÉDÉ DE FABRICATION

(30) Priority: 08.09.2017 IN 201721028148
(43) Date of publication of application: 13.03.2019
(73) Proprietor: Welspun India Limited, Mumbai, Maharashtra 400013 (IN)
(72) Inventor: GOENKA, Dipali, 400 013 MUMBAI (IN); JOSHI, Lalit, 400 013 MUMBAI (IN)
(74) Representative: Finnegan Europe LLP

(56) References cited:
- WO-A1-2008/096045
- WO-A1-2009/126793
- WO-A1-2012/150902

## Description

### TECHNICAL FIELD

The present disclosure relates to a composite filter media and a method of making such a composite filter media.

### BACKGROUND

Modern automobiles are complicated machines having numerous moving parts which have to work smoothly in a synchronized fashion to give an optimum output, both in terms of power and efficiency. To keep the parts moving smoothly and efficiently it is essential that they are properly lubricated. All the moving parts in the engine need clean oil to properly lubricate them. However, due to constant metal-to-metal contact, tiny bits of metal tend to dislodge due to friction while the engine is working. These dislodged metallic bits flow in the oil stream. If these dislodged bits of metal are allowed to recirculate through the oil, they could damage other metallic parts, which eventually will cause erosion in the engine. A quality oil filter can be employed to stop this erosion from happening. The oil filter cleans the oil as it passes through the filter and prevents abrasive contaminants from damaging other parts in the engine. It is also important that foreign contaminants not be introduced into the fuel line. Fuel filters are used in the fuel line to screen out dirt and rust particles from the fuel. Fuel filters are normally made into cartridges containing a filter paper. Fuel filters serve a vital function in today's modern, tight-tolerance engine fuel systems.

The automotive industry is striving to meet increasingly stringent fuel emission standards and demand for higher efficiently engines. The advent of Bharat-IV and Euro 6 emission standards coupled with the trend toward more compact engines are pushing automotive manufactures and their supplies to develop components that can help address the market shifts related to fuel-efficiency. One area of focus is fuel and oil filters. Recent advances in manufacturing and material technologies have led to the development of numerous types of filters. Filter media which were traditionally used were selected from steel wool, wire meshes, metal screens, etc. Today, filters are made from numerous materials such as cellulose or paper, synthetic material, or micro-glass.

Filters may be manufactured from woven or nonwoven materials. Of the two, nonwoven materials are generally preferred, since nonwovens exhibit certain desirable characteristics, such as versatility, low cost and diverse functionality. Conventional nonwovens may be manufactured using mechanical bonding, chemical bonding, and/or thermal bonding techniques. For filter media, a common bonding technique is needle punching, a form of mechanical bonding. In needle punching, individual fibers are consolidated to form a web by repeated insertion and withdrawal of barbed needles through a fibrous matt of fibers. The constant insertion and withdrawal of the needles may weaken the fabric structure and create undesirable perforations. The perforations can compromise the filtering efficiency of the filter. Hydroentangling is another form of mechanical bonding whereby high pressure water jets are used to entangle the fibers. U.S. Patent No. 7,381,669 and U.S. Patent App. Pub. No. 2005/0000890 describe exemplary nonwovens manufactured using hydro-entanglement. WO2009/126793 discloses durable nonwoven fabrics comprising staple fibers. WO2012/150902 discloses a method of producing a hydroentangled nonwoven material. WO2008/096045 discloses a multicellular composite nonwoven material, a fluid filter and a method of making the nonwoven material.

### SUMMARY

There is a need to develop a filter media that exhibits better efficacy and sustains higher working temperatures over the life of the filter. An embodiment of the present disclosure is a hydroentangled composite filter media with a first side and a second side opposite the first side. The hydroentangled composite filter media includes a first layer having a plurality of first staple fibers that are entangled and defining the first side, the plurality of first staple fibers having a denier between about 0.01 to 1.0. The hydroentangled composite filter media includes a second layer having a plurality of second staple fibers that are entangled and defining the second side, the plurality of second staple fibers having a denier between about 1.0 to about 50. The second layer extends along and is entangled with the first layer so as to define a gradient of fiber denier along a thickness direction that extends from the first side to the second side. The hydroentangled composite filter media includes a bonding material that at least partially bonds the first staple fibers of the first layer to the second staple fibers of the second layer to impart stiffness to the hydroentangled composite filter media.

Another embodiment of the present disclosure is a method for manufacturing a composite filter according to claim 5.

### BRIEF DESCRIPTION OF THE DRAWINGS

The foregoing summary, as well as the following detailed description of illustrative embodiments of the present application, will be better understood when read in conjunction with the appended drawings. For purposes of illustrating the present application, the drawings show exemplary embodiments of the present disclosure. In the drawings:
Figure 1 is a schematic perspective view of a portion of a composite filter media according to an embodiment of the present disclosure;
Figure 2 is a cross-sectional view of the composite filter media taken along line 2-2 in Figure 1;
Figure 3 is a detailed sectional view of a portion of the composite filter media shown in Figure 2;
Figure 4 is a process flow diagram for a method of making a composite filter media illustrate din Figures 1-3;
Figure 5 is a schematic of a portion of a manufacturing line used to form the composite filter media illustrated in Figure 1; and
Figure 6 is graph illustrating certain properties of a composite filter media according to an embodiment of the present disclosure.

### DETAILED DESCRIPTION OF ILLUSTRATIVE EMBODIMENTS

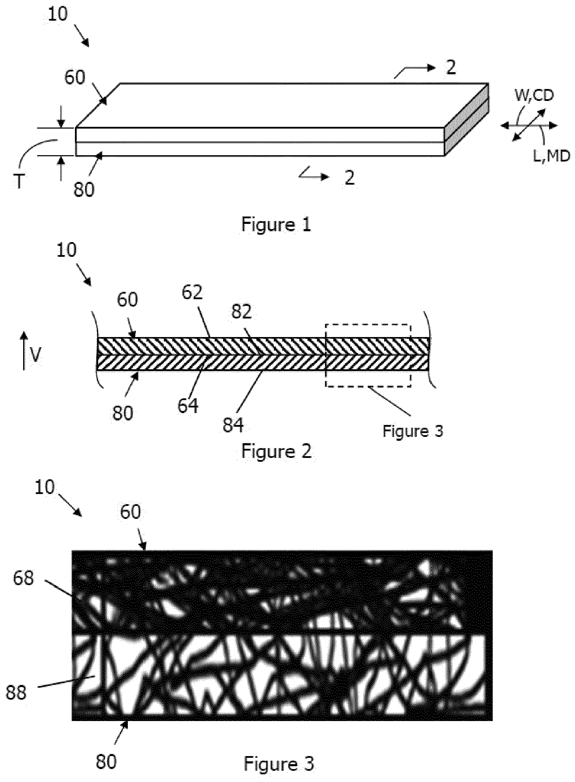

Referring to Figures 1-3, embodiments of the present disclosure include a composite filter media 10. The composite filter media 10 comprises a plurality of layers of staple fibers that are consolidated together via a hydroentangling process as further described below. The composite filter media 10 may be referred to as a hydroentangled composite filter media. The composite filter media 10 may be formed into a filter article suitable for range of applications, such as automotive filters, including, but not limited to, oil filter, air filters, fuel filters, and the like. However, the composite filter media may be used for applications other than automotive uses. The composite filter media, prior to conversion into a filter article, has a planar configuration for packaging in a roll good form, similar to textile roll goods. The composite filter media can be wound, slit, and/or formed into desired shapes for assembly into a filter article.

Continuing with Figures 1-3, the composite filter media 10 includes a plurality of layers. In one example, the composite filter media includes first layer 60 of staple fibers and a second layer 80 of staple fibers that is integrated with the first layer 60 of staple fibers. In an alternative embodiment, the composite filter media includes a third layer (not shown) of staple fibers integrated with the first and second layers 60 and 80. In accordance with the illustrated embodiment, the first layer 60 of staple fibers has a first side 62 (also a web face 62) and a second side 64 (or web back 64) opposed to the first side 62 along a vertical direction V. The second layer 80 of staple fibers also has a first side 82 (also a web face 82) and a second side 84 (or web back 84) opposed to the first side 82 along the vertical direction V. The second layer 80 of staple fibers is disposed adjacent to the second side 64 of the first layer of staple fibers along the vertical direction V. The composite filter media 10 has a thickness T that extends from the first side 62 to the second side 84 along the vertical direction. The first and second layers 60 and 80 of staple fibers are substantially coplanar with respect each other. Specifically, the hydroentangled composite 10 can be an elongate material having a length L (see Figure 1) that extends along a machine direction and a width W along a cross direction CD that is perpendicular to the machine direction MD. The cross direction and machine direction are perpendicular to each other and have the meaning one of skill in the art would ascribe to those terms.

Continuing with Figures 1-3, the first layer 60 includes a plurality of first staple fibers 68 that are entangled together, and the second layer 80 includes a plurality of second staple fibers 88 that are entangled together. The plurality of first staple fibers 68 have a denier between about 0.01 to about 1.0. The plurality of second staple fibers 88 having a denier between about 1.0 to about 50. The second layer 80 extends along, and is entangled, with the first layer 60 so as to define a gradient of fiber denier along the thickness T. The fiber denier gradient between the first layer 60 and the second layer 80 creates a pore size gradient that that helps improve filtration efficiency of the composite filter media. Other parameter of the staple fibers may be selected to aid in processing and/or filtration efficiency. In one example, the staple length of the fibers, whether in the first layer 60 and/or second layer 80, can be about 5 mm to about 50 mm. The fiber diameter can range from about 0.1 microns to about 30 microns or higher.

The composite filter media 10 can be comprised of a range of synthetic fibers. One of all of the layers 60,80 of staple fibers include polypropylene (PP) fibers, polyethylene terephthalate (PET) fibers, polyamide (PA6 and/or PA6,6,) fibers, polyethylene (PE) fibers, and/or polylactic acid (PLA) fibers, and/or copolymer of polymer fibers. The fibers can include homogenous staple fibers, bicomponent fibers, or multi-component fibers. Multi-component and/or bi-component fibers have sheath-core configuration, islands-in-the sea configuration, and/or segmented-pie configuration. Furthermore, the cross-sectional shape of the fibers can be varied and include a circular, trilobal, pentalobal, or multi-lobed shaped. While synthetic polymers are possible other fibers types could be used. Furthermore, different fibers blends may be selected for the first layer 60 and/or second layer 80 of fibers.

Continuing with Figures 1-3, the first layer 60 and the second layer are integrated together. As shown, the staple fibers in the first layer 60 are entangled and knotted with staple fibers in the second layer 80 using the techniques described herein. Advantageously, the composite filter media 10 is constructed such that the first layer 60 of staple fibers is substantially integrated with the second layer 80 of staple fibers. In one example, the layers 60, 80 are integrated in such a manner that if one attempted to delaminate the layers of fibers, the structural integrity of each individual fiber layer 60, 80 would be destroyed. Accordingly, the first layer 60 of fibers and the second layer 80 of fibers are not merely laying adjacent to each other. Rather, the first layer 60 of fibers and the second layer 80 of fibers define a monolithic composite web. The composite filter media may also employ a bonding material that at least partially bonds the first layer to the second layer to impart stiffness to the hydroentangled composite filter media. In one example, the bonding material may be chemical bonding or low-melt polymer fibers melted during processing to impart stiffness.

The composite filter media 10 has a range of basis weights. For instance, the hydroentangled composite has a basis weight in the range of about 100 grams per square meter to about 330 grams per square meter. In one embodiment, the basis weight of the hydroentangled composite is in the range of about 150 grams per square meter to about 250 grams per square meter. In another embodiment, the basis weight is in the range of about 170 grams per square meter to about 200 grams per square meter. The basis weight referred to herein can be determined according to ISO 9073-1:1989, Textiles --Test methods for nonwovens -- Part 1: Determination of mass per unit area."

The composite filter media 10 may be formed into a filter article. In operation, the filter media 10 has a fiber composition that is selected to withstand elevated temperatures during filtration of oil, filter, air and the like. In one example, the composite filter media is configured to withstand temperatures of -40 Celsius to about 250 degrees Celsius. In this context, the composite filter media does not substantially degrade over time when exposed to the wide range of temperatures and/or even cyclic variations of temperatures that extend from 40 Celsius to about 250 degrees Celsius.

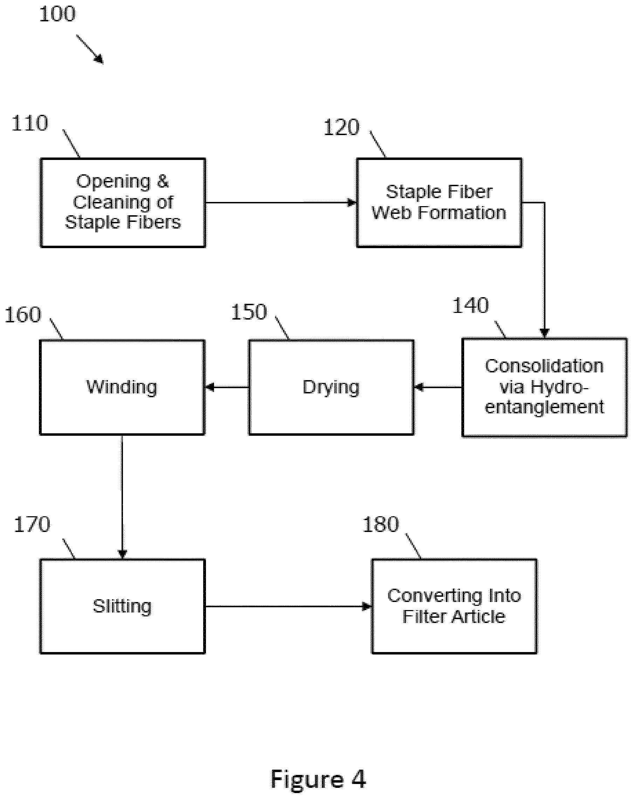

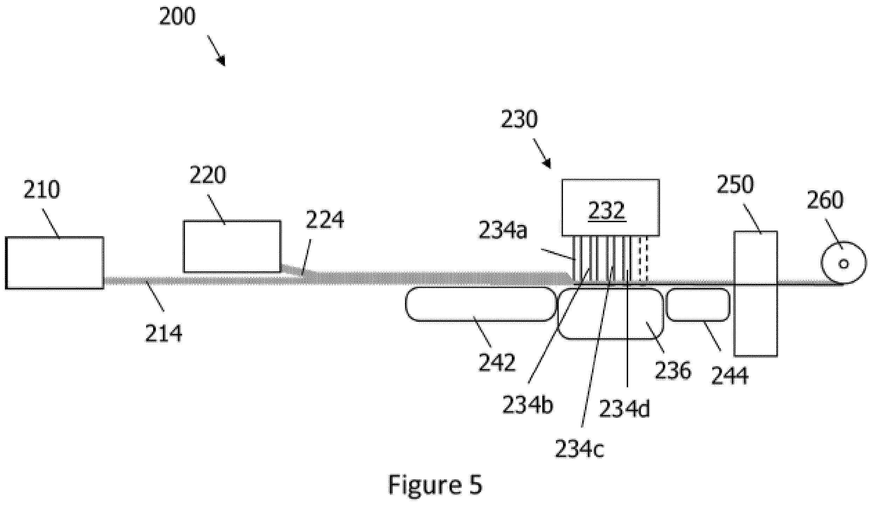

Turning now to Figures 4 and 5, a process 100 and system 200 for manufacturing the multi-layer composite filter media 10 is illustrated. The process 100 as illustrated is designed to form a hydroentangled composite filter media 10 and related filter articles described above. In general, the process 100 includes fiber preparation 110, web formation 120, web introduction 130, consolidation 140, drying 150, slitting 160, and converting 180. The manufacturing system shown in Figure 5 includes a first carding machine 210, a second carding machine 220, a conveying member 242, a consolidation unit 230, conveying member 244, drying unit 250, and a winding/slitting unit 260.

Continuing with Figures 4 and 5, in fiber preparation step 110. In step 110, bales of staples fibers are opened, and larger fiber tufts taken from the bale are reduced in size. The fiber preparation step may include a blending step where the tufts are further opened, and a predetermined weight of fibers are deposited onto a conveyer (not shown). Optional coarse and fine opening phases further individualize the staple fiber. From there, a feeding device introduces a loose, random assembly of staple fibers to web formation equipment, such as the first card machine 210 and the second carding machine 220.

The web formation step 120 transforms the random assembly of loose fibers into an ordered fibrous web via first and second carding machines 210 and 210. In step 120, the first carding machine 210 forms a first fibrous web of staple fibers 214 and the second carding machine 220 forms the second fibrous web of staple fibers 224. The first and second webs of fibers 214 and 214 are collected onto the conveying member 242 and transported to the consolidation unit 230.

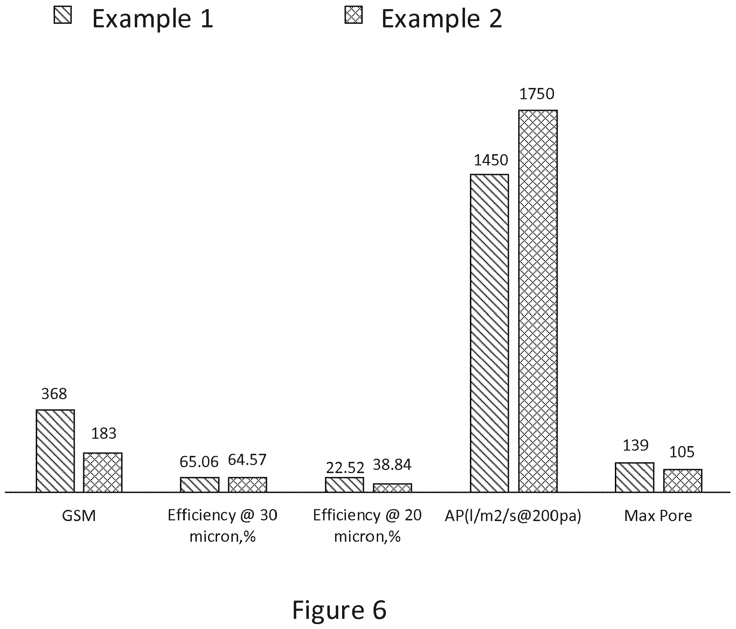

Continuing with Figures 4 and 5, after the web formation step 120, the layers webs of fibrous assembly are consolidated by the consolidation unit 230. In particular, during step 140, the first layer of staple fibers 214 are substantially entangled with the second layer of staple fibers 224 so as to define the hydroentangled composite 10. In accordance with illustrated embodiment in Figures 4 and 5, the consolidation unit 220 can be hydro-entanglement unit. The hydro-entanglement unit 220 includes a high pressure module 232 that includes a series water jet nozzle assemblies 234a, 234b, 234c, 234d....228n that are spaced apart along the machine direction MD. The number of water nozzle jet assemblies can be about 2 to about 10. Four water jet nozzle assemblies are shown for illustrative purposes. More than four or less than four could be used. Each water jet nozzle assembly 234a-234d is configured to eject a plurality of high pressure water jets into fibrous web layers 214, 224. A forming surface or screen 236 carries fibrous web along each water jet nozzle assembly 234a-234d where high pressure jets of water cause the staple fibers to entangle with each other. In accordance with an embodiment of the present disclosure, the hydroentangling step 140 includes subjecting the fibrous assembly layers 214, 224 water jets at a pressure of about 100 bar to about 400 bar. A second conveyer 234 advances the hydroentangled composite toward the next process step. Advantageously, hydro-entanglement processes for manufacturing filter media leads to more dimensionally stable and stronger materials. Hydroentangled filter media may also have enhanced filtration efficiency over needle punched filter media since hydroentangled materials do not have additional perforations introduced by the needle. See Figure 6 and tables 1 and 2 below.

Referring still to Figures 4 and 5, in step 150 the hydroentangled composite filter media 10 is introduced to a drying unit 240 via conveyor member 224 to remove moisture from the hydroentangled composite 10. Following the drying step 150, the hydroentangled composite may have a basis weight in the range of about 100 grams per square meter to about 330 grams per square meter. In one embodiment, the basis weight of the hydroentangled composite is in the range of about 150 grams per square meter to about 250 grams per square meter. In another embodiment, the basis weight is in the range of about 170 grams per square meter to about 200 grams per square meter. After the drying step 150, step 160 includes winding. Step 170 includes slitting the composite filter media 10 to required width.

The process 100 may include optional bonding steps whereby a supplemental bonding material is used to further bond the fibers and impart stiffness into the composite filter media 10. In one embodiment, the bonding step may include applying a chemical bonding agent to consolidated web. The chemical bonding agent may be adhesive or binder. Additional heating steps may be required to cure the chemical bonding agent as needed. In an alternative embodiment, the staple fibers include a low-melt polymer fiber. In that case, the bonding step may include an additional heating step whereby the low-melt fibers are exposed to temperature that exceed the melting temperature of the low-melt polymer fiber but do not exceed the melting temperature (or degradation temperature) of the other fibers. This causes the low-melt fibers to at least partially melt. When cooled, the low melt fibers solidity and impart the desired bonding stiffness to the composite filter media. The low melt fibers may comprise between 5% to about 40% or more by weight of the composite filter media.

Following converting and/or slitting steps 160 and 170, the process 100 includes converting 180 the roll goods into filter articles. Such filter articles may include a housing that contains part of the composite filter media a pleated form suitable for the intended application as described further above.

The following examples have been prepared to illustrate various attributes of the composite filter media 10 described herein. Example 1 is a typical needle punched filter media and example 2 is a composite filter media 10 made according to inventive principles herein. Tables 1 and 2 summarize properties of the examples 1 and 2. Figure 5 compares the data for example 1 and example 2.

**Table 1 Example 1**

| | |
|---|---|
| Basis Weight (gsm) | 368 |
| Filter Efficiency @ 30 micro (%) | 65.06 |
| Filter Efficiency @ 20 micro (%) | 22.52 |
| Air Permeability (1/m/s @ 200 pa) | 1450 |
| Maximum Pore Size (micron) | 139 |

**Table 2 Example 2**

| | |
|---|---|
| Basis Weight (gsm) | 183 |
| Filter Efficiency @ 30 micro (%) | 64.57 |
| Filter Efficiency @ 20 micro (%) | 38.84 |
| Air Permeability (1/m/s @ 200 pa) | 1750 |
| Maximum Pore Size (micron) | 105 |

As shown in Figure 5, table 1, and table 2, the composite filter media made as described herein has the same or better filter efficiency with a much lower basis weight. Furthermore, the composite filter media has higher air permeability and lower maximum pore size compared to example 1, the needle-punched filter media. The basis weight is tested according to ISO 9073-1. The filter efficiency is tested according to ISO 4548-4. The air permeability is tested according to ISO 9237. The maximum pore size is tested according to ISO 15901-1. All test methods cited in this disclosure refer to the ISO test methods in effect at the filing date of the present application.

It should be appreciated that the composite filter media may have range of end properties that are suitable for filtration. In one example of an embodiment of the present disclosure, the composite filter media 10 is a hydro-entangled web that includes a first layer of staple fibers with a denier up to about 1.0 denier and a second layer of staple fibers with a denier between 1.0 and 15.0. In such an example, the composite filter media has a basis weight in the range of about 100 grams per square meter to about 300 grams per square meter. In such an example, the staple fibers may be synthetic fibers, and preferably thermoplastic staple fibers. The composite filter media can have a filtration efficiency at 30 microns that is at least 60 %. The composite filter media can have a filtration efficiency at 20 microns that is at least 35 %. The maximum pore size may range go up to about 150 microns. The air permeability may range from about 1250 to about 2000.

It will be appreciated by those skilled in the art that various modifications and alterations of the present disclosure can be made without departing from the broad scope of the appended claims. Some of these have been discussed above and others will be apparent to those skilled in the art. The scope of the present disclosure is limited only by the claims

## Claims

1. A hydroentangled composite filter media with a first side and a second side opposite the first side, the hydroentangled composite filter media comprising:
a first layer having a plurality of first staple fibers that are entangled and defining the first side, the plurality of first staple fibers having a denier between about 0.01 to 1.0;
a second layer having a plurality of second staple fibers that are entangled and defining the second side, the plurality of second staple fibers having a denier between about 1.0 to about 50, wherein the second layer extends along and is entangled with the first layer so as to define a gradient of fiber denier along a thickness direction that extends from the first side to the second side; and
a bonding material that at least partially bonds the first staple fibers of the first layer to the second staple fibers of the second layer to impart stiffness to the hydroentangled composite filter media.

2. The hydroentangled composite filter media of claim 1, wherein the bonding material is:
a chemical bonding agent comprising at least one of an adhesive and a binder, or
a thermal bonding material comprising low-melt polymer fibers.

3. The hydroentangled composite filter media of claim 1 or claim 2, further comprising a third layer between the first layer and the second layer, the third layer having a plurality of third staple fibers, the plurality of third staple fibers having a denier that is different than the denier of the plurality of first staple fibers and the denier of the plurality of second staple fibers, wherein the third layer extends and is entangled with the first layer and second the layer.

4. The hydroentangled composite filter media of any of claims 1 to 3, wherein the composite fibrous media is configured to withstand a temperature in the range of -40 degrees Celsius to 250 degrees Celsius.

5. The hydroentangled composite filter media of any of claims 1 to 4, wherein the plurality of first staple fibers and the plurality of second staple fibers each comprise mono-component staple fibers.

6. The hydroentangled composite filter media of any of claims 1 to 4, wherein the plurality of first staple fibers and the plurality of second staple fibers each comprise multi-component staple fibers.

7. The hydroentangled composite filter media of claim 6, wherein the multi-component staple fiber are one of a) islands-in-the sea fibers, b) segmented pie fiber, c) sheath-core fibers, d) side-by-side fibers, and e) lobe-tipped fibers.

8. The hydroentangled composite filter media of any of claims 1 to 4, wherein the plurality of first staple fibers and the plurality of second staple fibers include at least one of a) polypropylene fibers, b) polyethylene terephthalate fibers, c) polyamide fibers, d) polyethylene fibers, and e) polylactic acid fibers.

9. A method for forming a composite fibrous media of any of claims 1 to 8, the method comprising:
forming a first fibrous web comprising a plurality of first staple fibers, the first staple fibers having a denier of between about 0.01 to 1.0;
forming a second fibrous web comprising a plurality of second staple fibers, the second staple fibers having a denier of between 1 to about 50;
combining the first fibrous web along one side of the second fibrous web to from a fibrous assembly having a gradient of fiber denier;
wherein by hydroentangling the fibrous assembly with a hydro-entanglement unit, the first fibrous web layer is substantially entangled with the second fibrous web layer so as to define a monolithic composite fibrous media and the first layer and the second layer are consolidated to define a gradient of fiber denier along a thickness direction that extends from a first side of the composite filter media to a second side of the composite filter media; and
bonding the composite fibrous media to impart stiffness to the hydroentangled composite filter media.

10. The method of claim 9, wherein the bonding step includes:
applying an aqueous chemical solution comprising a chemical bonding agent to the composite fibrous media, or
melting low melt polymer fibers in at least one of the first fibrous layer and the second fibrous layer.

11. The method of claim 9, wherein the hydro-entanglement unit includes a plurality of water jet nozzle assemblies, wherein at least one of the water jets assemblies is oriented in the first direction and at least one of the water jets is oriented in the second direction that is offset at an angle with respect to first direction.

12. The method of claim 11, wherein the plurality of water jets assemblies includes 2 up to 10 water jet assemblies.

13. The method of claim 11 or claim 12, wherein the plurality of water jets assemblies emits water jets at a pressure between about 50 bars to about 400 bars.

14. The method of claim 13, further comprising drying the composite fibrous media to substantially remove moisture from the composite fibrous media.

15. The method of any of claims 9 to 14, wherein forming the first fibrous web includes carding the plurality of first staple fibers with a first carding machine, and wherein forming the second fibrous web includes carding the plurality of second staple fibers with a second carding machine.

## Patentansprüche

1. Wasserstrahlverfestigtes Verbundfiltermedium mit einer ersten Seite und einer der ersten Seite gegenüberliegenden zweiten Seite, wobei das wasserstrahlverfestigte Verbundfiltermedium umfasst:
eine erste Schicht, die eine Vielzahl von ersten Stapelfasern aufweist, die verwickelt sind und die erste Seite definieren, wobei die Vielzahl von ersten ersten Stapelfasern einen Denier zwischen etwa 0,01 bis 1,0 aufweist;
eine zweite Schicht, die eine Vielzahl von zweiten Stapelfasern aufweist, die verwickelt sind und die zweite Seite definieren, wobei die Vielzahl von zweiten Stapelfasern einen Denier zwischen etwa 1,0 bis etwa 50 aufweist, wobei sich die zweite Schicht entlang der ersten Schicht erstreckt und mit dieser verwickelt ist, um einen Faserdenier-Gradienten entlang einer Dickenrichtung zu definieren, die sich von der ersten Seite zur zweiten Seite erstreckt; und
ein Bindematerial, das die ersten Stapelfasern der ersten Schicht zumindest teilweise mit den zweiten Stapelfasern der zweiten Schicht verbindet, um dem wasserstrahlverfestigten Verbundfiltermedium Steifheit zu verleihen.

2. Wasserstrahlverfestigtes Verbundfiltermedium nach Anspruch 1, wobei das Bindematerial Folgendes ist:
ein chemisches Bindemittel, das mindestens einen von einem Klebstoff und einem Bindemittel umfasst, oder
ein thermisches Bindematerial, das niedrigschmelzende Polymerfasern umfasst.

3. Wasserstrahlverfestigtes Verbundfiltermedium nach Anspruch 1 oder Anspruch 2, ferner umfassend eine dritte Schicht zwischen der ersten Schicht und der zweiten Schicht, wobei die dritte Schicht eine Vielzahl von dritten Stapelfasern aufweist, wobei die Vielzahl von dritten Stapelfasern einen anderen Denier aufweist als der Denier der Vielzahl von ersten Stapelfasern und der Denier der Vielzahl von zweiten Stapelfasern, wobei sich die dritte Schicht erstreckt und mit der ersten Schicht und der zweiten Schicht verwickelt ist.

4. Wasserstrahlverfestigtes Verbundfiltermedium nach einem der Ansprüche 1 bis 3, wobei das Faserverbundmedium dazu ausgestaltet ist, einer Temperatur im Bereich von -40 ° Celsius bis 250 ° Celsius standzuhalten.

5. Wasserstrahlverfestigtes Verbundfiltermedium nach einem der Ansprüche 1 bis 4, wobei die Vielzahl von ersten Stapelfasern und die Vielzahl von zweiten Stapelfasern jeweils Einkomponenten-Stapelfasern umfassen.

6. Wasserstrahlverfestigtes Verbundfiltermedium nach einem der Ansprüche 1 bis 4, wobei die Vielzahl von ersten Stapelfasern und die Vielzahl von zweiten Stapelfasern jeweils Mehrkomponenten-Stapelfasern umfassen.

7. Wasserstrahlverfestigtes Verbundfiltermedium nach Anspruch 6, wobei die Mehrkomponenten-Stapelfasern eine von a) Islands-in-the-sea-Fasern, b) Segmented-pie-Faser, c) Mantelkernfasern, d) Side-by-side-Fasern und e) Fasern mit lappenartigen Spitzen sind.

8. Wasserstrahlverfestigtes Verbundfiltermedium nach einem der Ansprüche 1 bis 4, wobei die Vielzahl von ersten Stapelfasern und die Vielzahl von zweiten Stapelfasern mindestens eine von a) Polypropylenfasern, b) Polyethylenterephthalatfasern, c) Polyamidfasern, d) Polyethylenfasern und e) Polymilchsäurefasern umfasst.

9. Verfahren zum Bilden eines Faserverbundmediums nach einem der Ansprüche 1 bis 8, wobei das Verfahren umfasst:
Bilden eines ersten Faservlieses, das eine Vielzahl von ersten Stapelfasern umfasst, wobei die ersten Stapelfasern einen Denier zwischen etwa 0,01 bis 1,0 aufweisen;
Bilden eines zweiten Faservlieses, das eine Vielzahl von zweiten Stapelfasern umfasst, wobei die zweiten Stapelfasern einen Denier zwischen 1 und etwa 50 aufweisen;
Kombinieren des ersten Faservlieses entlang einer Seite des zweiten Faservlieses, um eine faserige Anordnung zu bilden, die einen Faserdenier-Gradienten aufweist;
wobei durch Wasserstrahlverfestigen der Faseranordnung mit einer Wasserstrahlverfestigungseinheit die erste Faservliesschicht im Wesentlichen mit der zweiten Faservliesschicht verwickelt wird, um ein monolithisches Faserverbundmedium zu definieren, und die erste Schicht und die zweite Schicht verdichtet werden, um einen Faserdenier-Gradienten entlang einer Dickenrichtung zu definieren, die sich von einer ersten Seite des Verbundfiltermediums zu einer zweiten Seite des Verbundfiltermediums erstreckt; und
Binden des Faserverbundmediums, um dem wasserstrahlverfestigten Verbundfiltermedium Steifheit zu verleihen.

10. Verfahren nach Anspruch 9, wobei der Bindungsschritt umfasst:
Aufbringen einer wässrigen chemischen Lösung, die ein chemisches Bindemittel umfasst, auf das Faserverbundmedium oder
Schmelzen von niedrigschmelzenden Polymerfasern in mindestens einer von der ersten Faserschicht und der zweiten Faserschicht.

11. Verfahren nach Anspruch 9, wobei die Wasserstrahlverfestigungseinheit eine Vielzahl von Wasserstrahldüsenanordnungen umfasst, wobei mindestens eine der Wasserstrahlanordnungen in der ersten Richtung ausgerichtet ist und mindestens einer der Wasserstrahlen in der zweiten Richtung ausgerichtet ist, die in einem Winkel zur ersten Richtung versetzt ist.

12. Verfahren nach Anspruch 11, wobei die Vielzahl von Wasserstrahlanordnungen 2 bis zu 10 Wasserstrahlanordnungen umfasst.

13. Verfahren nach Anspruch 11 oder Anspruch 12, wobei die Vielzahl von Wasserstrahlanordnungen Wasserstrahlen mit einem Druck zwischen etwa 50 bar bis etwa 400 bar ausgibt.

14. Verfahren nach Anspruch 13, ferner umfassend das Trocknen des Faserverbundmediums, um im Wesentlichen Feuchtigkeit von dem Faserverbundmedium zu entfernen.

15. Verfahren nach einem der Ansprüche 9 bis 14, wobei das Bilden des ersten Faservlieses das Kardieren der Vielzahl von ersten Stapelfasern mit einer ersten Kardiermaschine umfasst und wobei das Bilden des zweiten Faservlieses das Kardieren der Vielzahl von zweiten Stapelfasern mit einer zweiten Kardiermaschine umfasst.

## Revendications

1. Milieu filtrant composite hydrolié avec un premier côté et un second côté opposé au premier côté, le milieu filtrant composite hydrolié comprenant :
une première couche possédant une pluralité de premières fibres discontinues qui sont enchevêtrées et définissant le premier côté, la pluralité de premières fibres discontinues possédant un denier compris entre environ 0,01 et 1,0 ;
une deuxième couche possédant une pluralité de deuxièmes fibres discontinues qui sont enchevêtrées et définissant le second côté, la pluralité de deuxièmes fibres discontinues possédant un denier compris entre environ 1,0 et environ 50, ladite deuxième couche s'étendant le long de la première couche et étant enchevêtrée avec celle-ci de façon à définir un gradient de denier de fibre le long d'une direction d'épaisseur qui s'étend à partir du premier côté jusqu'au second côté ; et
un matériau de liaison qui lie au moins partiellement les premières fibres discontinues de la première couche aux deuxièmes fibres discontinues de la deuxième couche pour conférer de la rigidité au milieu filtrant composite hydrolié.

2. Milieu filtrant composite hydrolié selon la revendication 1, ledit matériau de liaison étant :
un agent de liaison chimique comprenant au moins l'un d'un adhésif et d'un liant, ou d'un matériau de liaison thermique comprenant des fibres de polymère à bas point de fusion.

3. Milieu filtrant composite hydrolié selon la revendication 1 ou 2, comprenant en outre une troisième couche entre la première couche et la deuxième couche, la troisième couche possédant une pluralité de troisièmes fibres discontinues, la pluralité de troisièmes fibres discontinues possédant un denier qui est différent du denier de la pluralité de premières fibres discontinues et du denier de la pluralité de deuxièmes fibres discontinues, ladite troisième couche s'étendant et étant enchevêtrée avec la première couche et la deuxième couche.

4. Milieu filtrant composite hydrolié selon l'une quelconque des revendications 1 à 3, ledit milieu fibreux composite étant conçu pour résister à une température comprise dans la plage allant de -40 degrés Celsius à 250 degrés Celsius.

5. Milieu filtrant composite hydrolié selon l'une quelconque des revendications 1 à 4, ladite pluralité de premières fibres discontinues et ladite pluralité de deuxièmes fibres discontinues comprenant chacune des fibres discontinues mono-composant.

6. Milieu filtrant composite hydrolié selon l'une quelconque des revendications 1 à 4, ladite pluralité de premières fibres discontinues et ladite pluralité de deuxièmes fibres discontinues comprenant chacune des fibres discontinues multicomposantes.

7. Milieu filtrant composite hydrolié selon la revendication 6, lesdites fibres discontinues multicomposantes étant l'une parmi a) des fibres à îlots de fibrilles dans la mer, b) des fibres de tarte découpée, c) des fibres à âme enrobée, d) des fibres côte à côte et e) des fibres à pointe de lobe.

8. Milieu filtrant composite hydrolié selon l'une quelconque des revendications 1 à 4, ladite pluralité de premières fibres discontinues et ladite pluralité de deuxièmes fibres discontinues comprenant au moins l'une parmi a) des fibres de polypropylène, b) des fibres de polytéréphtalate d'éthylène, c) des fibres de polyamide, d) les fibres de polyéthylène et e) les fibres d'acide polylactique.

9. Procédé permettant la formation d'un milieu fibreux composite selon l'une quelconque des revendications 1 à 8, le procédé comprenant :
la formation d'une première bande fibreuse comprenant une pluralité de premières fibres discontinues, les premières fibres discontinues possédant un denier compris entre environ 0,01 et 1,0 ;
la formation d'une seconde bande fibreuse comprenant une pluralité de deuxièmes fibres discontinues, les deuxièmes fibres discontinues possédant un denier compris entre 1 et environ 50 ;
la combinaison de la première bande fibreuse le long d'un côté de la second bande fibreuse pour former un ensemble fibreux possédant un gradient de denier de fibres ;
en hydroliant l'ensemble fibreux avec une unité d'hydroliage, ladite première couche de bande fibreuse étant sensiblement enchevêtrée avec la deuxième couche de bande fibreuse de façon à définir un milieu fibreux composite monolithique et ladite première couche et ladite deuxième couche étant consolidées pour définir un gradient de denier de fibre le long d'une direction d'épaisseur qui s'étend à partir d'un premier côté du milieu filtrant composite jusqu'à un second côté du milieu filtrant composite ; et
la liaison des milieux fibreux composites pour conférer de la rigidité au milieu filtrant composite hydrolié.

10. Procédé selon la revendication 9, ladite étape de liaison comprenant :
l'application d'une solution chimique aqueuse comprenant un agent de liaison chimique au milieu fibreux composite, ou la fusion des fibres polymères à bas point de fusion dans au moins l'une de la première couche fibreuse et de la deuxième couche fibreuse.

11. Procédé selon la revendication 9, ladite unité d'hydroliage comprenant une pluralité d'ensembles de buses à jet d'eau, au moins l'un des ensembles de jets d'eau étant orienté dans la première direction et au moins l'un des jets d'eau étant orienté dans la seconde direction qui est décalé d'un angle par rapport à la première direction.

12. Procédé selon la revendication 11, ladite pluralité d'ensembles de jets d'eau comprenant de 2 jusqu'à 10 ensembles de jets d'eau.

13. Procédé selon la revendication 11 ou 12, ladite pluralité d'ensembles de jets d'eau émettant des jets d'eau à une pression comprise entre environ 50 bars et environ 400 bars.

14. Procédé selon la revendication 13, comprenant en outre le séchage du milieu fibreux composite pour éliminer sensiblement l'humidité du milieu fibreux composite.

15. Procédé selon l'une quelconque des revendications 9 à 14, ladite formation de la première bande fibreuse comprenant le cardage de la pluralité de premières fibres discontinues avec une première cardeuse, et ladite formation de la seconde bande fibreuse comprenant le cardage de la pluralité de deuxièmes fibres discontinues avec une seconde cardeuse.
